# EUROPEAN PATENT APPLICATION

(11) **EP 4 417 891 A1**
(43) Date of publication of application: **21.08.2024**
(21) Application number: 23156979.9
(22) Date of filing: 16.02.2023
(51) Int. Cl.: F24H 1/00, F24H 1/12, F24H 3/04, F24H 9/00, B60H 1/22, H05B 3/44

(54) **ELECTRIC FLUID HEATER**

(71) Applicant: VALEO SYSTEMES THERMIQUES, 78320 Le Mesnil Saint-Denis (FR)
(72) Inventor: GAS, Pierre-Louis, 10800 Prague (CZ); RUZICKA, Ales, 10800 Prague (CZ); KARAASLAN, Serif, 78320 Le Mesnil-Saint-Denis (FR); DECOOL, Laurent, 78320 Le Mesnil-Saint-Denis (FR)
(74) Representative: Valeo Systèmes Thermiques

(57) **Abstract**

An electric fluid heater (100) for an automobile vehicle comprises at least a pair of plates (112) defining an interspace (136) and a flow passage. Each plate (112) having a separator that divides the plate (112) into a first and second section (112A, 112B). A heating module (122) disposed in the interspace (136) comprises base plates (164) received within a hollow member (166), and a heating element (170) wound over the base plate (164). The heating element (170) is wounded such that a density of the heating element (170) on a portion of the base plate (164) adjacent to the separator is either less with respect to the density of the heating element (170) on remaining portion of the base plate (164) corresponding to the first and second section (112A, 112B) or the portion of the base plate (164) adjacent to the separator is void of the heating element (170).

## Description

The present invention generally relates to an electric fluid heater, more particularly to an electric fluid heater for vehicles.

A vehicle generally includes a heater for heating air to be supplied to a passenger compartment. Alternatively, the heater is used to supply heated air to demist or defrost the windscreen. In some cases, the heater is used to supply hot air or hot coolant for cold starting the engine. With the emergence of the electric vehicles, the heater is also applicable for battery thermal management. The heaters can be used for efficient thermal management of the batteries used for powering the electric motor, thereby drastically enhancing the service life of the batteries. The fluid to be heated is generally passed through a heat exchanger, which includes a heating element such as for example, heat exchange flow pipes through which a heated fluid circulates in case of thermal heater or an electrical resistive heater supplied with current. Particularly, the fluid to be heated circulates across the heat exchanger and extracts heat from the heating element.

The heater includes a plate stack having a plurality of plates. The plate stack are provided with an inlet port and an outlet port. The stack is arranged in pairs of plates. The plates are divided into a first section, a second section and a middle section separating the first section and the second section. The inlet port in fluid communication with a first fluid passage formed through the first section of the plate stack and the outlet port in fluid communication with a second fluid passage formed through the second section of the plates. A heating element is disposed between each pair of plates.

The fluid entering the heater flows from the inlet, and then passes through the first fluid flow path and the second fluid flow path. The fluid path are formed around pairs of plates. Simultaneously, the fluid extracts heat from the heating elements and egresses through the outlet. The middle section of the plates includes a separator that divides the plate into the first section and the second section of plates. The middle section and the separator are in contact with the heating elements. As there is no fluid flow at the middle section of the plates, which is in contact with the heating elements, it leads to formation of hotspots at the middle section of the plates. Overtime, it may result in cracking of housing enclosing the heating elements and may end with failure of heater.

Accordingly, there remains a need for an improved fluid heater for automobile vehicles.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of forgoing, the present invention discloses an electric fluid heater for an automobile vehicle. The heater comprises at least a pair of plates configured to define an interspace and a flow passage. At least one of the plates having at least one separator that divides the respective plates into a first section and a second section. The heater further comprises at least one heating module received in the interspace. Each heating module comprises a hollow member, one or more base plates received within the hollow member, and at least one heating element wound over the base plates. The heating element is wounded such that a density of the heating element on a portion of the base plate adjacent to the separator is either less with respect to the density of the heating element on remaining portion of the base plate corresponding to the first section and the second section or the portion of the base plate adjacent to the separator is void of the heating element. In one embodiment, the separator is a rib extending across the plates. In one embodiment, the separator is a groove extending across the plates.

The heating element is a heating coil comprising a number of windings. The heating element comprises a first coil portion and a second coil portion. The first coil portion wound around a portion of the base plate corresponding to the first section of the plate. The second coil portion wound around a portion of the base plate corresponding to the second section of the plate. Further, a pitch between winding connecting the first coil portion and the second coil portion is different than a pitch between adjacent windings at the first coil portion and the second coil portion. In one embodiment, a pitch between winding connecting the first coil portion and the second coil portion is greater than a pitch between adjacent windings at the first coil portion and the second coil portion.

In one embodiment, the first coil portion and the second coil portion are a single heating element, and the single heating element is connected to a pair of electrodes. In another embodiment, the first coil portion and the second coil portion are separate heating elements.

In one embodiment, the heating module comprises at least two base plates arranged one above another. The first coil portion wound around a portion of the base plates corresponding to the first section of the plate, and the second coil portion wound around a portion of the base plates corresponding to the second section of the plate. The first coil portion connected to a first pair of electrodes and the second coil portion connected to a second pair of electrodes. Further, each coil portion comprises a first end portion and a second end portion. Each coil portion is wound such that a portion extending from the first end portion is wound around both the base plates and the second end portion is taken out from the base plates for connection with the electrodes by passing the second end portion between the plates.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of an electrical fluid heater in accordance with an embodiment of the present invention;
FIG. 2 illustrates an exploded view of the electrical fluid heater of FIG. 1;
FIG. 3 illustrates a perspective view of a first end plate of FIG. 1;
FIG. 4 illustrates a perspective view of a second end plate of FIG. 1;
FIG. 5 illustrates a perspective view of a pair of intermediate plates forming an interspace of FIG. 1;
FIG. 6 illustrates a perspective view of a heating module of FIG. 1;
FIG. 7 illustrates a perspective view of a heating element of FIG. 6;
FIG. 8 is a simplified illustration of a heating element of FIG. 6, according to another embodiment of the present invention;
FIG. 9 is a simplified illustration of a side view of the heating element of FIG. 8;
FIG. 10 illustrates a perspective view of a first intermediate plate of FIG. 1, and
FIG. 11 illustrates a perspective view of a second intermediate plate of FIG. 1.

It must be noted that the figures disclose the invention in a detailed enough way to be implemented, said figures helping to better define the invention if needs be. The invention should however not be limited to the embodiment disclosed in the description.

The present invention discloses an electric fluid heater for an automobile vehicle. The heater comprises at least a pair of plates configured to define an interspace and a flow passage. At least one of the plates having at least one separator that divides the respective plates into a first section and a second section. The heater further comprises at least one heating module received in the interspace. Each heating module comprises a hollow member, one or more base plates received within the hollow member, and at least one heating element wound over the base plate. The heating element is wounded such that a density of the heating element on a portion of the base plate adjacent to the separator is either less with respect to the density of the heating element on remaining portion of the base plate corresponding to the first section and the second section or the portion of the base plate adjacent to the separator is void of the heating element. Since, the present invention reduces the density of the heating element or removes the heating element at the area of the heater where there is no flow of heat exchange fluid, the heater prevents formation of hotspots at the portion separating the first section and the second section.

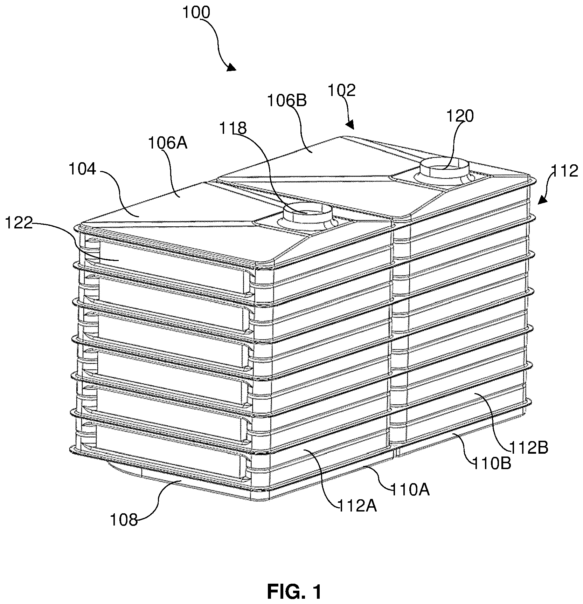

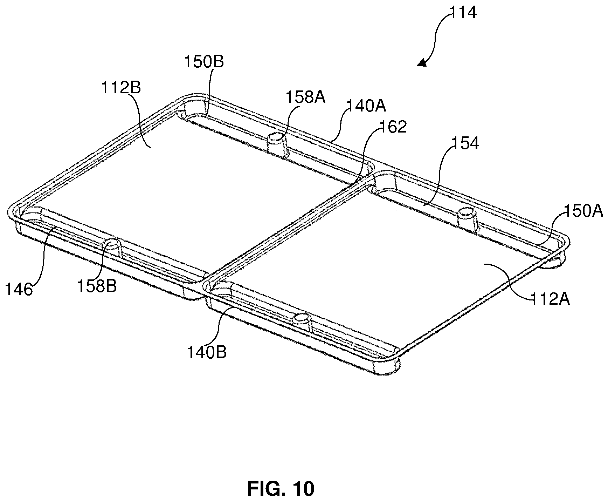

FIG. 1 illustrates an isometric view of an electric fluid heater 100, hereinafter referred to as fluid heater 100, in accordance with an embodiment of the present invention. The fluid heater 100 comprises a plate stack 102 having a plurality of intermediate plates 112. The plate stack 102 includes a pair of end plates 104 and 108, a plurality of heating modules 122 and a plurality of intermediate plates 112, wherein each intermediate plate 112 is formed of different sections 112A and 112B. The heater 100 further comprises at least one separator that divides the respective plates 112 into a first section 112A and a second section 112B. In one embodiment, the separator may be a rib 162, shown FIG. 10. In another embodiment, the separator may be a groove, which separates the plates 112 into the first section 112A and the second section 112B.

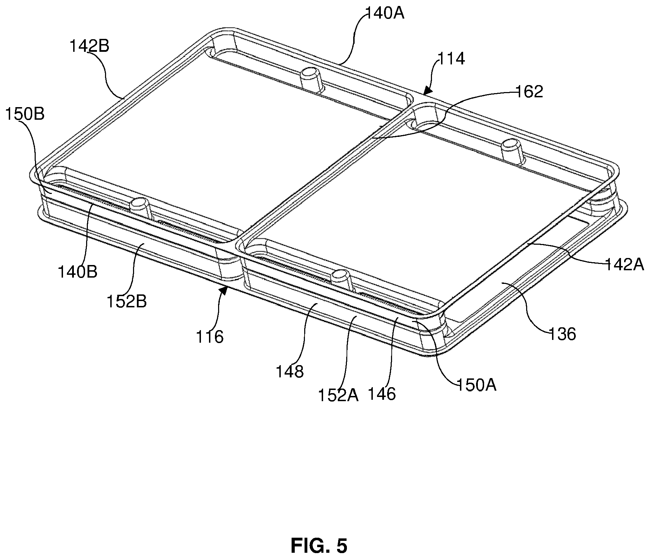

In another embodiment, the electric fluid heater 100 comprises at least a pair of plates 112. The electric fluid heater 100 is also referred as fluid heater 100 in this document. The pair of plates 112 is configured to define an interspace 136 (shown in FIG. 5) and a flow passage. At least one of the plates 112 having at least one separator that divides the respective plates 112 into the first section 112A and the second section 112B.

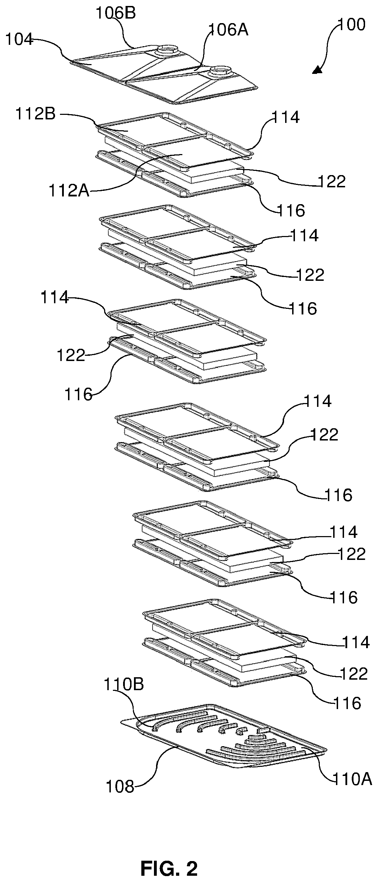

FIG. 2 illustrates an exploded view of the fluid heater 100 and the sequence in which the different elements of the fluid heater 100 are arranged and assembled with respect to each other. The pair of end plates 104 and 108 include a first end plate 104 and a second end plate 108.

Referring to FIG. 1, 2 and 7, the plurality of intermediate plates 112 are arranged in pairs of intermediate plate 114, 116. Each pair 114, 116 includes a first heat intermediate plate 114 and a second intermediate plate 116. The first intermediate plate 114 being joined to the second intermediate plate 116 to form an interspace 136 therebetween. A fluid flow path or fluid flow passes is defined adjacent to a pair of intermediate plates 114, 116 and a heating module 122. Each intermediate plate 112 is formed into different sections 112A, 112B corresponding to the different portions 106A, 106B of the first end plate 104 and the different portions 110A, 110B of the second end plate 108. The first sections 112A of the intermediate plates 112 defines fluidly coupled first fluid flow passes. The second sections 112B of intermediate plates 112 defines fluidly coupled second fluid flow passes. The first fluid flow passes are also referred as first fluid path and the second fluid flow passes are also referred as second fluid path throughout this document.

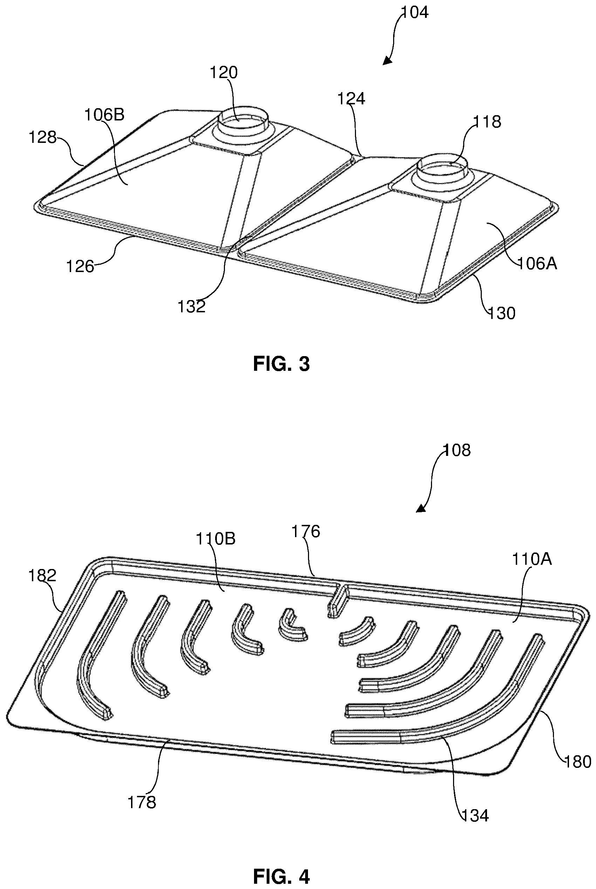

Referring to FIG. 3, the first end plate 104 is defined by the opposite longer walls 124 and 126 and the pair of opposite shorter walls 128 and 130. The opposite longer walls 124 and 126 are also referred to as first and second longer walls 124 and 126. The opposite shorter walls 128 and 130 are also referred to as first and second shorter walls 128 and 130. The opposite longer walls 124 and 126 and the opposite shorter walls 128 and 130 define the periphery of the first end plate 104 and at least a portion of the fluid flow passes corresponding to the first end plate 104. The first end plate 104 includes an inlet 118 for ingress of fluid into and an outlet 120 for egress of fluid out of the fluid heater 100 from same side of the fluid heater 100 to achieve certain advantages. For example, configuring the inlet 118 and the outlet 120 on the same side of the fluid heater 100 provides compact configuration to the fluid heater 100 and addresses packaging issues. Further, such configuration also addresses routing issues associated with routing of inlet and outlet conduits connected to the inlet 118 and the outlet 120 for supplying and delivering out fluid from the fluid heater 100. The second end plate 108 fluidly couples the first and the second fluid flow passes formed around adjacent the heating modules 122 and in fluid communication with the inlet 118 and the outlet 120, respectively.

The first end plate 104 includes a first portion 106A and a second portion 106B, wherein a groove 132 separates the first portion 106A from the second portion 106B. The first portion 106A and the second portion 106B are raised portion that inherently form the groove 132 at the interface between first portion 106A and the second portion 106B. The cross section of the first portion 106A is increasing from the inlet 118 towards the first fluid flow passes defined by the first sections 112A.

Referring to FIG. 4, the second end plate 108 includes a first and second longer wall 176, 178, and a first and second shorter wall 180, 182. The first and second longer wall 176, 178, and the first and second shorter wall 180, 182 defines the periphery of the end plate 108. The second end plate 108 formed with fluidly coupled first and second portions 110A and 110B. The inlet 118 and the outlet 120 on same side causes the fluid to follow a U-turn trajectory between the inlet 118 and the outlet 120.

Further as illustrated in FIG. 1 - FIG. 3, the inlet 118 is disposed at the centre of the first portion 106A and proximal to the longer walls 124 of the first end plate 104. Such strategic placement of the inlet 118 ensures even distribution of the coolant to the portion of the fluid flow passes defined by the first sections 112A. Similarly, the second portion 106B corresponding to the second sections 112B of the intermediate plates 112 and is converging from the second sections 112B to the outlet 120 in the fluid flow direction. Specifically, the cross section of the second portion 106B is decreasing from the second fluid flow passes defined by the second sections 112B towards the outlet 120.

Further, again referring to the FIG. 1 - FIG. 3, the outlet 120 is also disposed at the centre of the second portion 106B and proximal to the longer walls 124 of the first end plate 104. In accordance with another embodiment of the present invention, the outlet 120 is disposed at the corner of the first end plate 104 defined at the intersection of the first longer wall 124 and the first shorter wall 128. Specifically, the outlet 120 is farthest from the groove 124. Such strategic placement of the outlet 120 ensures that the portion of the fluid flow passes defined by the second sections 112B of the intermediate plates 112 is filled before the fluid egresses through the outlet 120. More specifically, such strategic placement of the outlet 120 ensures even distribution of the coolant in the fluid flow passes defined by the second sections 112B before egressing through the outlet 120. Such configuration of the outlet 120 avoids trapping air in the area beneath the second portion and the fluid flow passes defined by the second sections 112B by scavenging the fluid evenly underneath the second portion 106B of the first end plate 104. In another embodiment, the outlet 120 can be disposed horizontally instead of being disposed vertically to reduce back-pressure and improve flow path.

However, the present invention is not limited to any particular configuration of the first end plate 102 with the inlet 118 and the outlet 120 in any particular position. The inlet and the outlet can be positioned on the first and the second portions so as to avoid air trapping by scavenging the fluid evenly underneath the first and second portions 106A and 106B respectively based on multiple fluid deflecting walls 134, shown in FIG.4, formed on surface of the second end plate 108. The first portion 110A and the second portion 110B of the second end plate 108 is corresponding to the first sections 112A and the second sections 112B of the intermediate plates 112 and the first portion 106A and the second portion 106B of the first end plate 104. However, the first and the second portions 110A and 110B of the second end plates 108 are in fluid communication with each other unlike the first and second portions 106A and 106B of the first end plate 104.

Referring to FIG. 1 to 3, in the assembled configuration of the intermediate plates 112, the first fluid flow passes receive a heat exchange fluid distributed thereto by the first portion 106A of the first end plate 104 from the inlet 118 for heat exchange with at least a portion of the heating module 122 sandwiched between the intermediate plates 112. The second end plate 108 fluidly couples the first fluid passes to the second fluid passes. The second flow passes deliver fluid to the second portion 106B of the first end plate 104 for egress through the outlet 120 after heat exchange with the heating module 122 in the assembled configuration of the intermediate plates 112.

Referring to FIG. 5, each intermediate plate 112 includes a first edge portion 140A and a second edge portion 140B opposite to that of the first edge portion 140A. Each intermediate plate 112 further includes a first side portion 142A and a second side portion 142B opposite to that of the first side portion 142A. The first edge portion 140A and the second edge portion 140B are the longer sidewalls of the intermediate plate 112. The first side portion 142A and the second side portion 142B are the shorter sidewalls of the intermediate plate 112. The longer sidewalls and the shorter sidewalls defines the periphery of the intermediate plate 112 that defines at least a portion of the fluid flow passes defined by the adjacent intermediate plates 112.

The first intermediate plate 114 comprises a depression 146 along a length of the first and second edge portions 140A, 140B. The second intermediate plate 116 comprises an elevation 148 complementary to the depression 146 along a length of the first and second edge portions 140A, 140B thereof.

The depression 146 of the first intermediate plate 114 brought in contact with the elevation 148 of the second intermediate plate 116 and joined at the contacting portions defined by the elevation 148 and depression 146 of each pair of intermediate plate plates 112 to form an interspace 136 therebetween. At least one heating module 122 is accommodated at the interspace 136 of each pair of intermediate plates 112. In one embodiment, the heating module 122 may include at least two sections, which corresponds to the different sections 112A, 112B of the intermediate plate 112. The interspace 136 comprises a profile complementary to the profile of the heating module 122. The heating module 122 is slid into the interspace 136, which accommodates the heating module 122 therein without welding. In one embodiment, the heating module 122 is slid into the interspace 136 and thermally conductive type adhesive material may be filled between the heating module 122 and the plates 112. The adhesive material achieves a homogeneous contact between the plates 112 the entire heating module surface, thereby avoiding hotspots. In one embodiment, the depression 146 has at least one of a rectangular shaped cross section and a square shaped cross section. In one embodiment, the elevation 148 has at least one of a rectangular shaped cross section and a square shaped cross section. In one embodiment, the interspace 136 is a hollow space. In another embodiment, the interspace 136 is a tubular space.

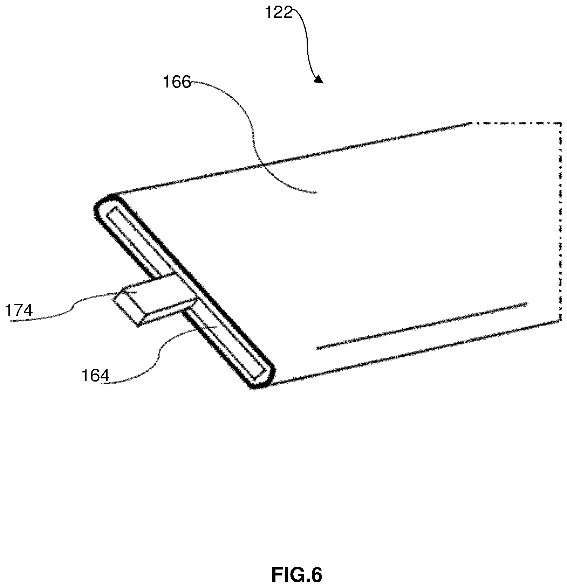

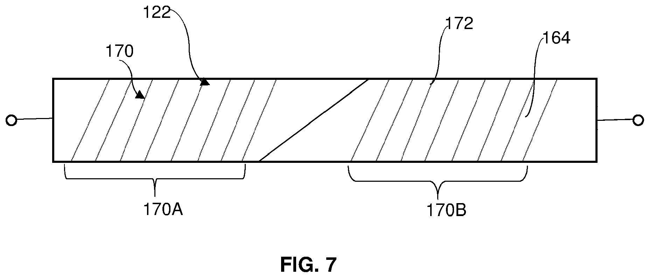

Referring to FIG. 6, the heating module 122 comprises a hollow member 166, at least one base plate 164 received within the hollow member 166, and at least one heating element 170 wound over the base plate 164. Each heating module 122 includes electrodes 174 on both sides for power supply through the heating module 122. Alternatively, the electrodes 174 may be on the same side of the heating module 122, which may reduce the number of components and packaging size. Referring to FIG. 6 and FIG. 7, the heating element 170 is wounded such that a density of the heating element 170 on a portion of the base plate 164 adjacent to the separator is less with respect to the to the density of the heating element 170 on remaining portion of the base plate 164 corresponding to the first section 112A and the second section 112B. The heating element 170 is, for example, a heating coil 170 comprising a number of windings 172. The heating element 170 comprises a first coil portion 170A and a second coil portion 170B. The first coil portion 170A and the second coil portion 170B are single heating element, which is connected to a pair of electrodes.

The first coil portion 170A wound around a portion of the base plate corresponding to the first section 112A of the plate 112. The second coil portion 170B wound around a portion of the base plate 164 corresponding to the second section 112B of the plate 112. The pitch between the windings 172 connecting the first coil portion 170A and the second coil portion 170B is different than a pitch between adjacent windings 172 at the first coil portion 170A and the second coil portion 170B. In one embodiment, a pitch between winding 172 connecting the first coil portion 170A and the second coil portion 170B is greater than a pitch between adjacent windings 172 at the first coil portion 170A and the second coil portion 170B. Thus, reducing the number of windings 172 at a portion adjacent to the separator, the present invention prevents formation of hotspots.

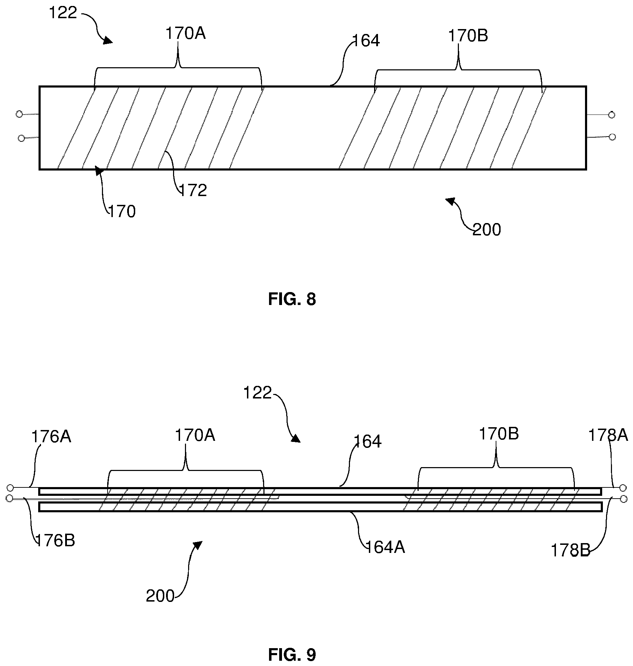

Referring to FIG. 8 and FIG. 9, in another embodiment, represented with numeral 200, the heating module 122 comprises the hollow member 166, at least two base plates 164, 164A received within the hollow member 166, and a heating element 170 wound over the base plates 164, 164A. The heating element 170 comprises a first coil portion 170A and a second coil portion 170B. The first coil portion 170A and the second coil portion 170B are separate heating element. The base plates 164, 164A are arranged one above another and the heating element 170 is wound over the two plates 164, 164A. The first coil portion 170A is wound over a portion of the base plates 164, 164A corresponding to the first section 112A of the plates 112. The second coil portion 170B is wound over a portion of the base plates 164, 164A corresponding to the second section 112B of the plates 112. The first coil portion 170A is connected to a first pair of electrodes and the second coil portion 170B is connected to a second pair of electrodes.

Each coil portion 170A, 170B comprises a first end portion 176A, 178A and a second end portion 176B, 176B. The coil portion 170A, 170B wound around both the plates 164, 164A. Each coil portion 170A, 170B is wound such that a portion extending from the first end portion 176A, 178A is wound around both the base plates 164, 164A and the second end portion 176B, 176B is taken out from the base plates 164, 164A for connection with the electrodes by passing the second end portion 176B, 176B between the base plates 164, 164A. This allows the first end portion 176A, 178A and the second end portion 176B, 176B lie at the same side of the heater module 122. Thus, the provision of heating module 122 with void of windings 172, at a portion of the plates 112 where there is no flow of heat exchange fluid prevents the formation of hotspots.

Referring to FIG. 10, the depression 146 of the first intermediate plate 114 is divided into a first section 150A corresponding to the first section 112A of the intermediate plate 112 and a second section 150B corresponding to the second section 112B of the intermediate plate 112. Referring to FIG. 7, the elevation 148 of the second intermediate plate 116 is divided into a first section 152A corresponding to the first section 112A of the intermediate plate 112 and a second section 152B corresponding to the second section 112B of the intermediate plate 112. The first edge portion 140A and the second edge portion 140B of the intermediate plates 112 are formed with slots or openings 154, 156 for either one of ingress and egress of fluid from the fluid pass defined by the adjacent pair of intermediate plates 112.

The openings or slots 154, 156 are formed alternately on the opposite longer walls or edge portions 140A, 140B of each pair of the adjacent intermediate plates 112 to define zig-zag fluid flow path between the inlet 118 and the outlet 120 and permit fluid communication between the fluid flow passes defined by the adjacent intermediate plates 112. The zig-zag fluid flow path between the inlet 118 and the outlet 120 increases the length of the fluid flow path and accordingly enhances the contact area and contact time between the fluid flowing through the fluid flow passes and the heating element 122, thereby improving the efficiency and performance of the fluid heater 100

In accordance with an embodiment, if the openings or slots 154 are formed on the first intermediate plates 114 at portions thereof proximal to the edge portions 140A, 140B, then, the corresponding openings or slots 156 are formed on the subsequent adjacent intermediate plates 112 or the second intermediate plate 116 at edge portions 140A, 140B.

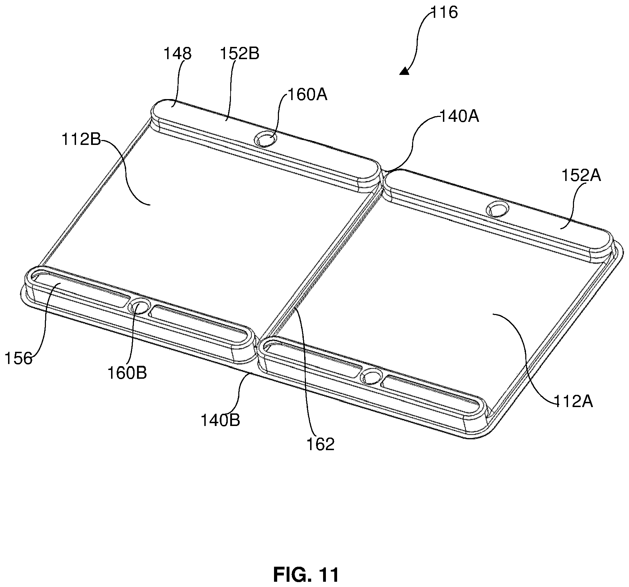

Referring to FIG. 10 and FIG. 11, each intermediate plate 112, specifically, the first intermediate plate 114 includes at least one of first positioning elements 158A, 158B in the form of guiding pins 158A, 158B and corresponding second positioning elements 160A, 160B in the form of guiding holes 160A, 160B. The guiding pins 158A, 158B formed on the first intermediate plate 146 engages with the corresponding guiding holes 160A, 160B of the adjacent intermediate plate 116 to position and assemble the intermediate plate 112 with respect to the adjacent intermediate plate112. Referring to the FIG. 5, there are two guiding pins 158A along the portion of the first intermediate plate 114 proximal to the first edge portion 140A. Further, there are two guiding pins 158B along the portion of the second intermediate plate 116 proximal to the second edge portion 140B. Each guiding pin 158A, 158B disposed on the respective portions of the intermediate plate 114 corresponding to the two sections 112A, 112B of the intermediate plate 114.

Referring to the FIG. 11, there are two guiding holes 160A along the portion of the second intermediate plate 116 proximal to the first edge portion 140A, each guiding hole 160A disposed on the respective portions of the second intermediate plate 116 corresponding to the two sections 112A, 112B of the intermediate plate 116. Further, there are two guiding holes 160B along the portion of the intermediate plate 116 proximal to the second edge portion 140B. Each guiding hole 160B disposed on the respective portions of the second intermediate plate 116 corresponding to the two sections 112A, 112B of the intermediate plate 116.

However, the present invention is not limited to any particular number, placement and configuration of the openings / slots formed on the edge portions 140A, 140B of the adjacent intermediate plates 112 as far as the slots / openings define zig-zag fluid flow path between the inlet 118 and the outlet 120 and permit fluid communication between the fluid flow passes defined by the adjacent intermediate plates 112. Further, each intermediate plate 112 includes at least one rib 162. The at least one rib 162 defines the different sections 112A, 112B of the intermediate plate 112. The ribs 162 of the adjacent intermediate plates 112 acts as poke - yoke feature and facilitates in correct assembly between the adjacent intermediate plates 112.

In any case, the invention cannot and should not be limited to the embodiments specifically described in this document, as other embodiments might exist. The invention shall spread to any equivalent means and any technically operating combination of means.

## Claims

1. An electric fluid heater (100) for an automobile vehicle, comprising:
at least a pair of plates (112) configured to define an interspace (136) and a flow passage, at least one of the plates (112) having at least one separator that divides the respective plates (112) into a first section (112A) and a second section (112B), and
at least one heating module (122) received in the interspace (136),
**characterized in that**,
the heating module (122) comprises a hollow member (166), one or more base plates (164) received within the hollow member (166), at least one heating element (170) wound over the base plate (164),
the heating element (170) is wounded such that a density of the heating element (170) on a portion of the base plate (164) adjacent to the separator is either less with respect to the density of the heating element (170) on remaining portion of the base plate (164) corresponding to the first section (112A) and the second section (112B) or the portion of the base plate (164) adjacent to the separator is void of the heating element (170).

2. The electric fluid heater (100) of claim 1, wherein the heating element (170) is a heating coil (170) comprising a number of windings (172).

3. The electric fluid heater (100) of claim 1, wherein the heating element (170) comprises a first coil portion (170A) and a second coil portion (170B).

4. The electric fluid heater (100) of claim 3, wherein the first coil portion (170A) is wound around a portion of the base plate (164) corresponding to the first section (112A) of the plate (112).

5. The electric fluid heater (100) of claim 3 or 4, wherein the second coil portion (170B) is wound around a portion of the base plate (164) corresponding to the second section (112B) of the plate (112).

6. The electric fluid heater (100) of any of claims 3 to 5, wherein a pitch between winding (172) connecting the first coil portion (170A) and the second coil portion (170B) is different than a pitch between adjacent windings (172) at the first coil portion (170A) and the second coil portion (170B).

7. The electric fluid heater (100) of claim 6, wherein a pitch between winding (172) connecting the first coil portion (170A) and the second coil portion (170B) is greater than a pitch between adjacent windings (172) at the first coil portion (170A) and the second coil portion (170B).

8. The electric fluid heater (100) of any of claims 3 to 7, wherein the first coil portion (170A) and the second coil portion (170B) are a single heating element, the single heating element being connected to a pair of electrodes.

9. The electric fluid heater (100) any of claims 3 to 5, wherein the first coil portion (170A) and the second coil portion (170B) are separate heating elements.

10. The electric fluid heater (100) of any preceding claim, wherein the heating module (122) comprises at least two base plates (164, 164A) arranged one above another.

11. The electric fluid heater (100) of claims 3 and 10 taken together, wherein the first coil portion (170A ) is wound around a portion of the base plates (164, 164A) corresponding to the first section (112A) of the plate (112), and the second coil portion (170B) is wound around a portion of the base plates (164, 164A) corresponding to the second section (122B) of the plate (112).

12. The electric fluid heater (100) of claim 11, wherein the first coil portion (170A) connected to a first pair of electrodes and the second coil portion (170B) connected to a second pair of electrodes.

13. The electric fluid heater (100) of claim 12, wherein each coil portion (170A, 170B) comprises a first end portion (176A, 178A) and a second end portion (176B, 178B), each coil portion (170A, 170B) is wound such that a portion extending from the first end portion (176A, 178A) is wound around both the base plates (164, 164A) and the second end portion (176B, 178B) is taken out from the base plates (164, 164A) for connection with the electrodes by passing the second end portion (176B, 178B) between the base plates (164, 164A).

14. The electric fluid heater (100) of any preceding claim, wherein the separator is a rib (162) extending across the plates (112).

15. The electric fluid heater (100) of any preceding claim, wherein the separator is a groove extending across the plates (112).
